(19) **Europäisches Patentamt / European Patent Office / Office européen des brevets**

(11) **EP 4 529 257 A1**

(12) **EUROPEAN PATENT APPLICATION**
published in accordance with Art. 153(4) EPC

(43) Date of publication:
26.03.2025 Bulletin 2025/13

(21) Application number: 23807037.9

(22) Date of filing: 18.05.2023

(51) International Patent Classification (IPC):
**H04W 24/08** $^{(2009.01)}$

(52) Cooperative Patent Classification (CPC):
**H04W 4/02; H04W 24/08**

(86) International application number:
**PCT/CN2023/095075**

(87) International publication number:
**WO 2023/222087 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 20.05.2022 CN 202210561085

(71) Applicant: **Huawei Technologies Co., Ltd.**
**Shenzhen, Guangdong 518129 (CN)**

(72) Inventors:
• **COLONE, Fabiola**
**Greater London W1T4TP (GB)**
• **FILIPPINI, Francesca**
**Greater London W1T4TP (GB)**
• **BRENNAN, Paul**
**Greater London W1T4TP (GB)**
• **DU, Rui**
**Shenzhen, Guangdong 518129 (CN)**
• **HAN, Xiao**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **SENSING METHOD AND APPARATUS**

(57) Embodiments of this application disclose a sensing method and a sensing apparatus. The method includes: obtaining a first packet received in a first time period; determining signal amplitude information corresponding to a header of the first packet; and determining motion information of a sensed object in the first time period based on the signal amplitude information. The motion information of the sensed object is determined based on the signal amplitude information corresponding to the header, so that the signal amplitude information can more accurately reflect the motion information of the sensed object. This helps improve sensing performance.

EP 4 529 257 A1

```
┌────────────────────────────────────────────────────┐
│  Obtain a first packet received in a first time period  │── S201
└────────────────────────────────────────────────────┘
                          │
                          ▼
┌────────────────────────────────────────────────────┐
│  Determine signal amplitude information corresponding to a  │── S202
│              header of the first packet                │
└────────────────────────────────────────────────────┘
                          │
                          ▼
┌────────────────────────────────────────────────────┐
│  Determine motion information of a sensed object in the first time  │── S203
│     period based on the signal amplitude information   │
└────────────────────────────────────────────────────┘
```

FIG. 2

## Description

This application claims priority to Chinese Patent Application No. 202210561085.5, filed with the China National Intellectual Property Administration on May 20, 2022 and entitled "SENSING METHOD AND SENSING APPARATUS", which is incorporated herein by reference in its entirety.

## TECHNICAL FIELD

This application relates to the field of communication technologies, and in particular, to a sensing method and a sensing apparatus.

## BACKGROUND

Wireless fidelity (wireless fidelity, Wi-Fi) sensing (sensing) mainly uses a Wi-Fi signal to sense a passive target, to implement target positioning or environment imaging. Generally, target sensing may mainly sense and estimate parameters such as a distance, an angle, and a speed of a target phase sensor.

In a sensing scenario, a transmit end, a receive end, and a sensed object located between the transmit end and the receive end are included. The transmit end transmits a signal, and a motion of the sensed object causes a delay/phase change of a reflected signal. The change causes an amplitude fluctuation of the signal received by the receive end, and the amplitude fluctuation may reflect a motion characteristic of the sensed object.

However, a signal transmission environment is complex and changeable, resulting in poor sensing performance.

## SUMMARY

Embodiments of this application provide a sensing method and a sensing apparatus. Motion information of a sensed object is determined based on signal amplitude information corresponding to a header, so that the signal amplitude information can more accurately reflect the motion information of the sensed object. This helps improve sensing performance.

According to a first aspect, an embodiment of this application provides a signal processing method. The method includes: obtaining a first packet received in a first time period; determining signal amplitude information corresponding to a header of the first packet; and determining motion information of a sensed object in the first time period based on the signal amplitude information.

In this technical solution, compared with that of a payload (payload) or a packet including a payload, the motion information of the sensed object is determined based on the signal amplitude information corresponding to the header, so that the signal amplitude information can more accurately reflect the motion information of the sensed object. This helps improve sensing performance.

In an implementation, the first packet is a packet of a first signal, and the first signal is a superimposed signal of a line of sight LOS path signal and a reflected signal, where the LOS path signal is a signal obtained after a second signal sent by a transmit end arrives at a receive end along a LOS path, and the reflected signal is a signal obtained after the second signal arrives at the receive end after being reflected by the sensed object and/or an environment.

In this technical solution, a motion of the sensed object causes a delay/phase change of the reflected signal. The change causes an amplitude fluctuation of the superimposed signal received by the receive end, and the amplitude fluctuation may reflect a motion characteristic of the sensed object.

In an implementation, a header of each packet of the first signal and the second signal includes a first sequence, and first sequences in headers of all packets of the second signal are the same; and a specific implementation of the determining signal amplitude information corresponding to a header of the first packet may be: determining signal amplitude information corresponding to a first sequence in the header of the first packet.

In this technical solution, because the first sequences in the headers of all packets of the second signal are the same, the signal amplitude information corresponding to the first sequence in the header of the first packet is more stable, and the signal amplitude information corresponding to the first sequence in the header of the first packet can better directly reflect the motion information of the sensed object. The motion information of the sensed object is determined based on the signal amplitude information corresponding to the first sequence in the header of the first packet. This helps improve sensing performance.

In an implementation, a specific implementation of the determining signal amplitude information corresponding to a first sequence in the header of the first packet may be: sampling the first sequence in the header of the first packet to obtain N sampling values; and determining N first values, where the N first values are N values obtained by performing modulo operations on the N sampling values or square values of N values, and a sum of the N first values is a second value, where the signal amplitude information corresponding to the first sequence is any one of the following: the second value, a square value of the second value, a result of dividing the second value by N, or a result of dividing a square value of the second value by N.

In an implementation, a specific implementation of the determining motion information of a sensed object in the first time period based on the signal amplitude information may be: removing signal amplitude information corresponding to the LOS path signal from the signal amplitude information, to obtain signal amplitude information corresponding to the reflected signal; and determining the motion information of the sensed object in the first time period based on the signal amplitude information corresponding to the reflected signal.

In this technical solution, an amplitude fluctuation may reflect a motion characteristic of the sensed object because a delay/phase of the reflected signal changes. After the signal amplitude information corresponding to the LOS path signal is removed, the motion information of the sensed object can be further reflected more accurately based on the signal amplitude information corresponding to the reflected signal. This helps improve sensing performance.

In an implementation, a specific implementation of the determining the motion information of the sensed object in the first time period based on the signal amplitude information corresponding to the reflected signal may be: performing time-frequency analysis processing on the signal amplitude information corresponding to the reflected signal to obtain Doppler information of the sensed object in the first time period; and determining the motion information of the sensed object in the first time period based on the Doppler information of the sensed object in the first time period.

In an implementation, the motion information of the sensed object in the first time period includes one or more of the following: a motion direction of the sensed object in the first time period; and information about whether the sensed object arrives at the LOS path in the first time period.

In an implementation, the receive end includes a first antenna and a second antenna, and the Doppler information includes a first Doppler frequency observed via the first antenna and a second Doppler frequency observed via the second antenna. The LOS paths include a first LOS path between the transmit end and the first antenna and a second LOS path between the transmit end and the second antenna. A specific implementation of the determining the motion information of the sensed object in the first time period based on the Doppler information of the sensed object in the first time period may be: determining the motion direction of the sensed object in the first time period based on first motion information of the sensed object relative to the first LOS path and second motion information of the sensed object relative to the second LOS path in the first time period, and based on a relative location between the first antenna and the second antenna, where the first motion information is determined based on the first Doppler frequency, and the second motion information is determined based on the second Doppler frequency.

In an implementation, the first motion information includes a moment at which the sensed object arrives at the first LOS path in the first time period, and the second motion information includes a moment at which the sensed object arrives at the second LOS path in the first time period.

In an implementation, the method may further include: determining a quantity of sensed objects based on the Doppler information.

In this technical solution, the sensed objects are estimated through a Doppler dimension, and the quantity of sensed objects that can be estimated is not limited by a quantity of antennas.

In an implementation, the Doppler information includes Doppler frequencies corresponding to different time moments in the first time period; and a specific implementation of the determining a quantity of sensed objects based on the Doppler information may be: determining the quantity of sensed objects based on a quantity of V shapes whose Doppler frequencies decrease first and then increase with time in the first time period.

In an implementation, the Doppler information includes Doppler frequencies corresponding to different time moments in the first time period; and if Doppler frequencies decrease with time in a second time period, a motion direction of the sensed object in the second time period is a direction close to the LOS path, where the second time period is included in the first time period; or if Doppler frequencies increase with time in a second time period, a motion direction of the sensed object in the second time period is a direction away from the LOS path.

In an implementation, the first sequence is a preamble sequence.

According to a second aspect, an embodiment of this application provides a sensing apparatus. The sensing apparatus has some or all functions of implementing the method example in the first aspect. For example, the functions of the sensing apparatus may have functions in some or all embodiments of this application, or may have a function of independently implementing any embodiment of this application. The function may be implemented by hardware, or may be implemented by hardware executing corresponding software. The hardware or the software includes one or more units or modules corresponding to the functions.

In an implementation, a structure of the sensing apparatus may include an obtaining unit and a processing unit. The processing unit is configured to support the sensing apparatus in performing a corresponding function in the foregoing method. The sensing apparatus may further include a storage unit. The storage unit is configured to be coupled to the obtaining unit and the processing unit, and the storage unit stores a computer program and data that are necessary for the sensing apparatus.

In an implementation, the sensing apparatus includes: an obtaining unit, configured to obtain a first packet received in a first time period; and a processing unit, configured to: determine signal amplitude information corresponding to a header of the first packet, and determine motion information of a sensed object in the first time period based on the signal amplitude information.

In an implementation, the first packet is a packet of a first signal, and the first signal is a superimposed signal of a line of sight LOS path signal and a reflected signal, where the LOS path signal is a signal obtained after a second signal sent by a transmit end arrives at a receive end along a LOS path, and the reflected signal is a signal obtained after the second signal arrives at the receive end after being reflected by the sensed object and/or an environment.

In an implementation, a header of each packet of the first signal and the second signal includes a first sequence, and first sequences in headers of all packets of the second signal are the same; and when being configured to determine the signal amplitude information corresponding to the header of the first packet, the processing unit is specifically configured to determine signal amplitude information corresponding to a first sequence in the header of the first packet.

In an implementation, when being configured to determine the signal amplitude information corresponding to the first sequence in the header of the first packet, the processing unit is specifically configured to sample the first sequence in the header of the first packet, to obtain N sampling values; and determine N first values, where the N first values are N values obtained by performing modulo operations on the N sampling values or square values of N values, and a sum of the N first values is a second value, where the signal amplitude information corresponding to the first sequence is any one of the following: the second value, a square value of the second value, a result of dividing the second value by N, or a result of dividing a square value of the second value by N.

In an implementation, when being configured to determine the motion information of the sensed object in the first time period based on the signal amplitude information, the processing unit is specifically configured to: remove signal amplitude information corresponding to the LOS path signal from the signal amplitude information, to obtain signal amplitude information corresponding to the reflected signal; and determine the motion information of the sensed object in the first time period based on the signal amplitude information corresponding to the reflected signal.

In an implementation, when being configured to determine the motion information of the sensed object in the first time period based on the signal amplitude information corresponding to the reflected signal, the processing unit is specifically configured to: perform time-frequency analysis processing on the signal amplitude information corresponding to the reflected signal to obtain Doppler information of the sensed object in the first time period; and determine the motion information of the sensed object in the first time period based on the Doppler information of the sensed object in the first time period.

In an implementation, the motion information of the sensed object in the first time period includes one or more of the following: a motion direction of the sensed object in the first time period; and information about whether the sensed object arrives at the LOS path in the first time period.

In an implementation, the receive end includes a first antenna and a second antenna, and the Doppler information includes a first Doppler frequency observed via the first antenna and a second Doppler frequency observed via the second antenna. The LOS paths include a first LOS path between the transmit end and the first antenna and a second LOS path between the transmit end and the second antenna. When being configured to determine the motion information of the sensed object in the first time period based on the Doppler information of the sensed object in the first time period, the processing unit is specifically configured to: determine the motion direction of the sensed object in the first time period based on first motion information of the sensed object relative to the first LOS path and second motion information of the sensed object relative to the second LOS path in the first time period, and a relative location between the first antenna and the second antenna, where the first motion information is determined based on the first Doppler frequency, and the second motion information is determined based on the second Doppler frequency.

In an implementation, the first motion information includes a moment at which the sensed object arrives at the first LOS path in the first time period, and the second motion information includes a moment at which the sensed object arrives at the second LOS path in the first time period.

In an implementation, the processing unit is further configured to determine a quantity of sensed objects based on the Doppler information.

In an implementation, the Doppler information includes Doppler frequencies corresponding to different time moments in the first time period; and when being configured to determine the quantity of sensed objects based on the Doppler information, the processing unit is specifically configured to determine the quantity of sensed objects based on a quantity of V shapes whose Doppler frequencies decrease first and then increase with time in the first time period.

In an implementation, the Doppler information includes Doppler frequencies corresponding to different time moments in the first time period; and if Doppler frequencies decrease with time in a second time period, a motion direction of the sensed object in the second time period is a direction close to the LOS path, where the second time period is included in the first time period; or if Doppler frequencies increase with time in a second time period, a motion direction of the sensed object in the second time period is a direction away from the LOS path.

In an implementation, the first sequence is a preamble sequence.

For example, the processing unit may be a processor, the obtaining unit may be an input/output unit, and the storage unit may be a memory.

In an implementation, the sensing apparatus includes: an input/output unit, configured to obtain a first packet received in a first time period; and a processor, configured to: determine signal amplitude information corresponding to a header of the first packet; and determine motion information of a sensed object in the first time period based on the signal amplitude information.

According to a third aspect, an embodiment of the present invention provides a computer-readable storage medium, where the computer-readable storage medium stores a computer program, the computer program includes program instructions, and when the program instructions are executed by a sensing apparatus, the sensing apparatus is enabled to perform the method in the first aspect.

According to a fourth aspect, this application further provides a computer program product including a computer program. When the computer product runs on a computer, the computer is enabled to perform the method according to the first aspect.

According to a fifth aspect, this application provides a chip system. The chip system includes at least one processor and an interface, configured to implement a function in the first aspect, for example, determine or process at least one of data and information in the foregoing method. In a possible design, the chip system further includes a memory, and the memory is configured to store a computer program and data that are necessary for a receive end. The chip system may include a chip, or may include a chip and another discrete component.

## BRIEF DESCRIPTION OF DRAWINGS

FIG. 1 is a diagram of an architecture of a communication system to which an embodiment of this application is applicable;

FIG. 2 is a schematic flowchart of a sensing method according to an embodiment of this application;

FIG. 3 is a diagram of a simulation scenario according to an embodiment of this application;

FIG. 4 is a simulation result diagram when only a LOS path exists according to an embodiment of this application;

FIG. 5 is a simulation result diagram of a LOS path signal and a reflection path signal according to an embodiment of this application;

FIG. 6 is a diagram of a scenario according to an embodiment of this application;

FIG. 7 is a schematic flowchart of another sensing method according to an embodiment of this application;

FIG. 8 is a diagram of a structure of an HE (Wi-Fi 6) SU (single user) PPDU;

FIG. 9 is a diagram of a structure of a sensing apparatus according to an embodiment of this application;

FIG. 10 is a diagram of a structure of another sensing apparatus according to an embodiment of this application; and

FIG. 11 is a diagram of a structure of a chip according to an embodiment of this application.

## DESCRIPTION OF EMBODIMENTS

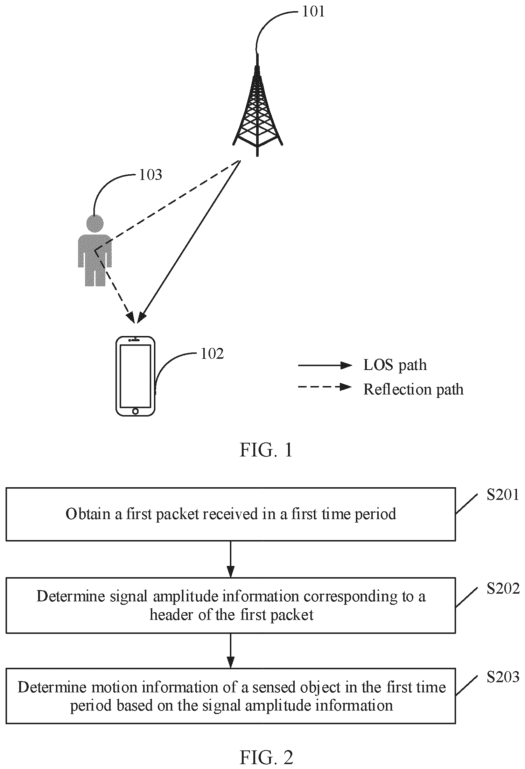

FIG. 1 is a diagram of an architecture of a communication system to which an embodiment of this application is applicable. The communication system may include but is not limited to one transmit end, one receive end, and one sensed object. A quantity and a form of devices and a quantity and a form of objects shown in FIG. 1 are used as examples and do not constitute a limitation on embodiments of this application. In actual application, two or more transmit ends, two or more receive ends, and two or more sensed objects may be included. For example, the communication system shown in FIG. 1 includes a transmit end 101, a receive end 102, and a sensed object 103 located between the transmit end 101 and the receive end 102. In this embodiment of this application, the sensed object may also be referred to as a target (target).

The transmit end 101 is configured to send a second signal, and the receive end 102 is configured to receive a first signal. The first signal is a signal that arrives at the receive end after the second signal is transmitted.

In FIG. 1, the second signal transmitted by the transmit end 101 may arrive at the receive end 102 through one or more paths. For example, a signal sent by the transmit end arrives at the receive end 102 through one path. The signal is irradiated to the sensed object 103, and arrives at the receive end 102 after being reflected by the sensed object 103. In FIG. 1, a reflection path is represented by a dashed line. In this case, the signal received by the receive end 102 is a reflection path signal. Generally, motion of the sensed object 103 causes a delay/phase change of the reflected signal, and the change causes an amplitude fluctuation of a superimposed signal received by the receive end 102. The amplitude fluctuation may reflect a motion characteristic of the sensed object 103. For example, the signal arrives at the receive end 102 through two paths. For one path, the signal arrives at the receive end 102 along a line of sight (Line Of Sight, LOS) path, and for the other path, the signal is irradiated to the sensed object 103, and arrives at the receive end 102 after being reflected by the sensed object 103. The LOS path is a path where a radio signal is transmitted in a straight line between the transmit end and the receive end without an obstacle. The LOS path may also be referred to as a direct path. In FIG. 1, the LOS path is represented by a solid line. In this case, the signal received by the receive end 102 is a superimposed signal of a LOS path signal and a reflection path signal. An amplitude fluctuation of the superimposed signal may also reflect the motion characteristic of the sensed object 103.

For example, packets are transmitted in a network. A packet of the second signal is sent by the transmit end 101, and a packet of the first signal is received by the receive end 102. An amplitude fluctuation of the first signal (for example, the reflection path signal or the superimposed signal) received by the receive end 102 may reflect the motion characteristic of the sensed object 103, and each packet of the first signal arrives at the receive end 102 through a same path. Therefore, an amplitude fluctuation of the packet of the first signal may also reflect the motion characteristic of the sensed object 103. A packet may include a header and a payload (payload). It may be understood that signal amplitude information corresponding to a header of the packet of the first signal may also reflect the motion characteristic of the sensed object 103.

Headers of different packets of a same signal may be the same or slightly different. Therefore, a signal amplitude corresponding to a header of a first packet received by the receive end is basically constant. However, because data transmission needs to be performed on the payload, payloads of different packets differ greatly and are random. Compared with that of a payload or a packet including a payload, the motion information of the sensed object is determined based on the signal amplitude information corresponding to the header, so that the signal amplitude information can more accurately reflect the motion information of the sensed object. This helps improve sensing performance.

It should be noted that, in addition to being referred to as a packet, a network transmission unit may have another name, and all words having a same meaning as the packet fall within the protection scope of this application. For example, the network transmission unit may also be referred to as a group or a packet (packet).

It should be further noted that the technical solutions in embodiments of this application invention may be applied to various communication systems, for example, a long term evolution (long term evolution, LTE) system, a 5th generation (5th generation, 5G) mobile communication system, or a 5G new radio (new radio, NR) system. Optionally, the method in this embodiment of this application is further applicable to various future communication systems, for example, a 6G system or another communication network.

In this embodiment of this application, the transmit end 101 is an entity configured to transmit a signal, and the receive end 102 is an entity configured to receive a signal. The transmit end 101 may be a terminal device or a network device, and the receive end 102 may also be a terminal device or a network device. The terminal device may be referred to as a terminal (terminal), user equipment (user equipment, UE), a mobile station (mobile station, MS), a mobile terminal (mobile terminal, MT), or the like. The terminal device may be deployed on land, where the deployment includes indoor or outdoor, or handheld or vehicle-mounted deployment, may be deployed on water (for example, on a ship), or may be deployed in air (for example, on an airplane, a balloon, or a satellite). The terminal device includes a handheld device, a vehicle-mounted device, a wearable device, or a computing device having a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a smart vehicle (smart vehicle) terminal device, a wireless terminal in industrial control, a wireless terminal in self driving, an uncrewed aerial vehicle, an UAV controller, a wireless terminal in telemedicine, a wireless terminal in a smart grid, a wireless terminal in a smart city (smart city), a wireless terminal in a smart home (smart home), or the like. A specific technology and a specific device form used by the terminal device are not limited in embodiments of this application.

The network device may be a radio access network (radio access network, RAN) device. The access network device may include a base station (base station, BS), and may be a device that is deployed in a radio access network and that can perform wireless communication with a terminal device. The base station may have a plurality of forms, such as a macro base station, a micro base station, a relay station, an access point, a satellite, and an uncrewed aerial vehicle. For example, the access network device in embodiments of this application may be a base station in 5G or a base station in an LTE system. The base station in 5G may also be referred to as a transmission reception point (transmission reception point, TRP) or a next generation NodeB (next generation NodeB, gNB). Alternatively, the access network device may be a transmission reception point (transmission reception point, TRP), an access point (access point, AP) in a wireless fidelity (wireless fidelity, Wi-Fi) system, or the like. A specific technology and a specific device form that are used by the network device are not limited in embodiments of this application.

It should be noted that, that the sensed object 103 in FIG. 1 is one person is only used as an example, and does not constitute a limitation on embodiments of this application. Alternatively, the sensed object 103 may be an animal, a plant, another object, or the like. A location of the sensed object 103 may change with time. A specific device form of the sensed object is not limited in this embodiment of this application. It should be further noted that the sensed object may be an active device, or may be a passive device or object. To be specific, in embodiments of this application, sensing measurement may be performed on the active device, or sensing measurement may be performed on the passive device or object.

It can be understood that the communication system described in embodiments of this application is for describing the technical solution in embodiments of this application more clearly, but does not limit the technical solution provided in embodiments of this application. A person skilled in the art may learn that with evolution of a system architecture and emergence of a new service scenario, the technical solutions provided in embodiments of this application is also applicable to a similar technical problem.

The following describes in detail a sensing method and a sensing apparatus provided in this application with reference to the accompanying drawings.

FIG. 2 is a schematic flowchart of a sensing method according to an embodiment of this application. Step S201 to step S203 are performed by a receive end, or a chip in a receive end. The following uses an example in which the receive end performs the sensing method for description. As shown in FIG. 2, the method may include but is not limited to the following steps.

Step S201: Obtain a first packet received in a first time period.

The receive end receives the first packet, analyzes the first packet received in the first time period, and further determines motion information of a sensed object in the first time period. There may be a plurality of first packets received in the first time period.

The first packet may be a packet of a first signal. For example, the first signal may be a Wi-Fi signal, a Bluetooth signal, a ZigBee (ZigBee) signal, or the like. Optionally, when the first signal is the Wi-Fi signal, the first packet may be a physical layer convergence procedure protocol data unit (Physical Layer Convergence Protocol (PLCP) Protocol Data Unit, PPDU).

In an implementation, the first signal may be a superimposed signal of a line of sight (Line Of Sight, LOS) path signal and a reflected signal, or a reflected signal. The LOS path signal is a signal obtained after a second signal sent by a transmit end arrives at the receive end along a LOS path, and the reflected signal may be a signal obtained after the second signal arrives at the receive end after being reflected by the sensed object and/or an environment.

Step S202: Determine signal amplitude information corresponding to a header of the first packet.

The first packet may include a header and a payload (payload). The signal amplitude information may be obtained by performing amplitude calculation on the header of the first packet. For example, after receiving the first packet, the receive end may separate the header of the first packet, and then extract the signal amplitude information of the header by using a square detector (or another detector).

Headers of different packets of a same signal may be the same or slightly different. Therefore, a signal amplitude corresponding to the header of the first packet received by the receive end is basically constant. However, because data transmission needs to be performed on the payload, payloads of different packets differ greatly and are random. Compared with that of the payload or the packet including the payload, the signal amplitude information corresponding to the header of the first packet can accurately reflect the motion information of the sensed object. This helps improve sensing performance.

Optionally, the first packet may carry data (data) or may not carry data. For example, the payload of the first packet is 0. In this case, it may be considered that the first packet includes only the header and does not include the payload. Optionally, the first signal may be a control signal or a data signal.

Step S203: Determine the motion information of the sensed object in the first time period based on the signal amplitude information.

The receive end may determine the motion information of the sensed object in the first time period based on change information of the signal amplitude information in the first time period.

Optionally, the motion information of the sensed object in the first time period may include but is not limited to one or more of the following: a motion direction of the sensed object in the first time period; and information about whether the sensed object arrives at the LOS path in the first time period. The motion direction of the sensed object in the first time period may include: a direction close to the LOS path, a direction away from the LOS path, a direction close to an antenna corresponding to the LOS path, a direction away from an antenna corresponding to the LOS path, a direction moving from west to east, a direction moving from north to south, a direction moving from southwest to northeast, a direction moving from a first antenna to a second antenna, a direction moving from a second antenna to a first antenna (assuming that the receive end includes the first antenna and the second antenna), or the like. One LOS path corresponds to one antenna. For example, the receive end includes the first antenna and the second antenna. The LOS paths may include a first LOS path between the transmit end and the first antenna and a second LOS path between the transmit end and the second antenna. A quantity of antennas at the receive end is the same as a quantity of LOS paths.

The motion direction of the sensed object in the first time period may remain unchanged, or may change. For example, a motion direction of the sensed object in a time period before the first time period is the direction close to the LOS path, and a motion direction of the sensed object in a time period after the first time period is the direction away from the LOS path. If the sensed object is located on the LOS path at a specific moment in the first time period, it may indicate that the sensed object has arrived at the LOS path in the first time period. If the sensed object is not located on the LOS path at all moments in the first time period, it may indicate that the sensed object has not arrived at the LOS path in the first time period.

In an implementation, determining the motion information of the sensed object in the first time period based on the signal amplitude information corresponding to the header of the first packet includes: removing signal amplitude information corresponding to the LOS path signal from the signal amplitude information corresponding to the header of the first packet, to obtain signal amplitude information corresponding to the reflected signal; and determining the motion information of the sensed object in the first time period based on the signal amplitude information corresponding to the reflected signal. Removing the signal amplitude information corresponding to the LOS path signal from the signal amplitude information corresponding to the header of the first packet is: eliminating the LOS path signal in the superimposed signal, and determining the motion information of the sensed object based on the remaining amplitude information of the reflected signal. A motion of the sensed object causes a delay/phase change of the reflected signal. The change causes an amplitude fluctuation of the superimposed signal received by the receive end, and the amplitude fluctuation may reflect a motion characteristic of the sensed object. The amplitude fluctuation may reflect the motion characteristic of the sensed object due to the delay/phase change of the reflected signal. After the signal amplitude information corresponding to the LOS path signal is removed, the motion information of the sensed object can be further reflected more accurately based on the signal amplitude information corresponding to the reflected signal. This helps improve sensing performance.

In an implementation, determining the motion information of the sensed object in the first time period based on the signal amplitude information corresponding to the reflected signal includes: performing time-frequency analysis processing on the signal amplitude information corresponding to the reflected signal to obtain Doppler information of the sensed object in the first time period; and determining the motion information of the sensed object in the first time period based on the Doppler information of the sensed object in the first time period. The time-frequency analysis processing may be Fourier transform, for example, short-time Fourier transform (Short-Time Fourier Transform, STFT) or fast Fourier transform (Fast Fourier Transform, FFT).

In an implementation, the Doppler information may include Doppler frequencies corresponding to different time moments in the first time period. If Doppler frequencies decrease with time in a second time period, a motion direction of the sensed object in the second time period may be a direction close to the LOS path, where the second time period is included in the first time period; or if Doppler frequencies increase with time in a second time period, a motion direction of the sensed object in the second time period may be a direction away from the LOS path. A motion direction of the sensed object relative to the LOS may be determined based on information about a change of the Doppler frequencies with time. Optionally, a moment at which the Doppler frequency is 0 may indicate that the sensed object arrives at the LOS path at the moment.

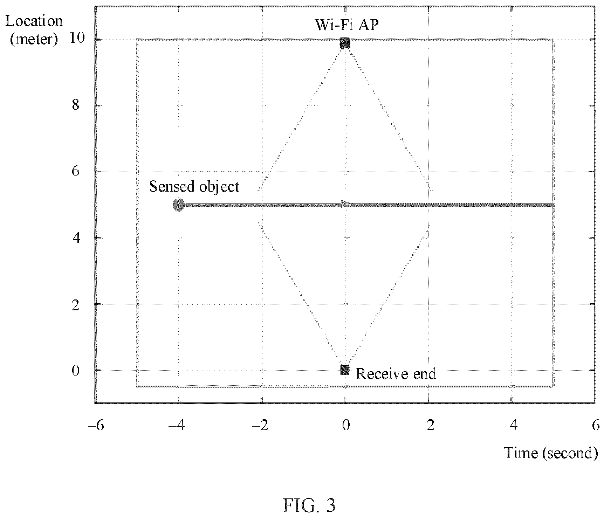

For example, the sensing method in this embodiment of this application is described with reference to a diagram of a simulation scenario shown in FIG. 3. FIG. 3 is a top view of the simulation scenario. In FIG. 3, an example in which a transmit end is a Wi-Fi AP is used, a sensed object moves from left to right with time, a horizontal axis represents time, and a vertical axis represents a location. Table 1 lists simulation parameters.

**Table 1 Simulation parameters**

| Parameter | Value |
|---|---|
| Carrier frequency ($f_0$) | 2.4 GHz |
| Wavelength ($\lambda$) | 0.1245 m |
| Sampling frequency ($f_s$) | 20 MHz |
| Modulation scheme | OFDM |
| Signal duration | 6s |
| Initial location of a sensed object ($x_0$, $y_0$, $z_0$) | (-4, 5, 1) m |
| Initial speed of a sensed object ($v_x$, $v_y$, $v_z$) | (1.5, 0, 0) m/s |
| Acceleration of a sensed object ($a_x$, $a_y$, $a_z$) | (0, 0, 0) m/s$^2$ |
| Signal-to-noise ratio | -20 dB |
| Signal-to-noise ratio of a LOS path | 20 dB |

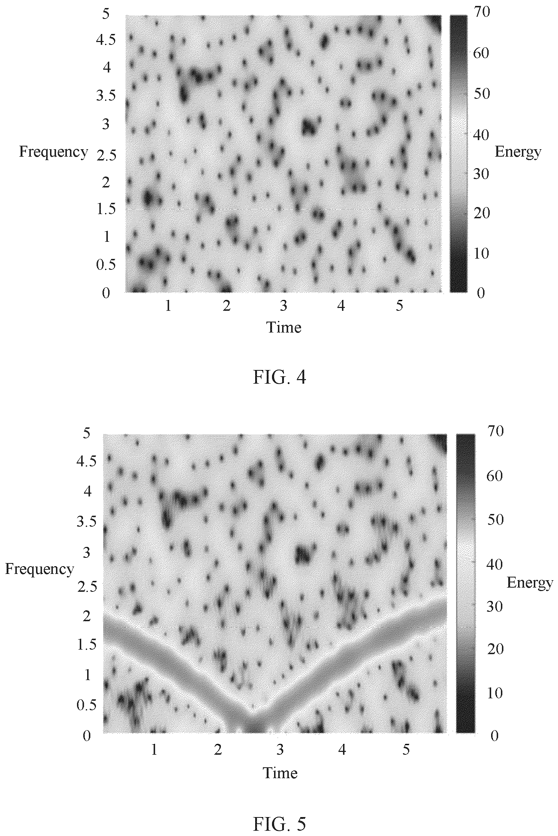

The first packet received by the receive end is simulated based on the simulation scenario shown in FIG. 3, and the first packet is processed by using the sensing method described in this embodiment of this application, to obtain simulation results shown in FIG. 4 and FIG. 5. FIG. 4 shows a simulation result when only a LOS path exists, and FIG. 5 shows a simulation result of a LOS path signal and a reflection path signal. In FIG. 4 and FIG. 5, a horizontal axis represents time, a left vertical axis represents frequency, and a right vertical axis represents energy. Energy may be represented through different colors.

Compared with FIG. 4, FIG. 5 has one more V-shaped high-energy component, and the high-energy component is a Doppler component of the sensed object. With reference to FIG. 3 and FIG. 5, it can be learned that when the sensed object approaches the LOS path between the Wi-Fi AP and the receive end, Doppler frequencies gradually decrease; when the sensed object arrives at the LOS path between the Wi-Fi AP and the receive end, a Doppler frequency decreases to zero (that is, a moment at which the Doppler frequency is 0 represents that the sensed object arrives at the LOS path); and when the sensed object continues to move and is away from the LOS path, Doppler frequencies gradually increase. It should be noted that, for ease of description, in this embodiment of this application, only amplitude information is used in a time-frequency analysis process, and an obtained frequency component is symmetric about a zero point in a Doppler coordinate axis. Correspondingly, the accompanying drawings in this embodiment of this application show only information about a positive Doppler half axis, and do not show information about a negative Doppler half axis that is symmetric to the positive Doppler half axis.

In an implementation, the receive end may include one or more antennas (receive antennas), and the receive end may determine a motion direction of the sensed object with reference to a relative location relationship between different antennas. According to the sensing method in this embodiment of this application, each receive antenna may generate a Doppler-time spectrum. Specifically, an example in which the receive end includes a first antenna and a second antenna is used. The Doppler information may include a first Doppler frequency observed via the first antenna and a second Doppler frequency observed via the second antenna. The first Doppler frequency is a Doppler frequency in a Doppler-time spectrum that is observed via the first antenna, and the second Doppler frequency is a Doppler frequency in the Doppler-time spectrum that is observed via the second antenna. The LOS paths may include a first LOS path between the transmit end and the first antenna and a second LOS path between the transmit end and the second antenna. That the receive end determines the motion information of the sensed object in the first time period based on the Doppler information of the sensed object in the first time period includes: That the receive end determines a motion direction of the sensed object in the first time period based on first motion information of the sensed object relative to the first LOS path and second motion information of the sensed object relative to the second LOS path in the first time period, and a relative location between the first antenna and the second antenna, where the first motion information is determined based on the first Doppler frequency, and the second motion information is determined based on the second Doppler frequency.

Optionally, the first motion information may include one or more of the following: a motion direction of the sensed object relative to the first LOS path in the first time period, and a moment at which the sensed object arrives at the first LOS path in the first time period. For example, the motion direction of the sensed object relative to the first LOS path in the first time period includes: a motion direction close to the first LOS path and a motion direction away from the first LOS path. Similarly, the second motion information may include one or more of the following: a motion direction of the sensed object relative to the second LOS path in the first time period, and a moment at which the sensed object arrives at the second LOS path in the first time period. For example, the motion direction of the sensed object relative to the second LOS path in the first time period includes a motion direction close to the second LOS path and a motion direction away from the second LOS path.

For example, the first motion information includes the motion direction of the sensed object relative to the first LOS path in the first time period, and the second motion information includes the motion direction of the sensed object relative to the second LOS path in the first time period. If the motion direction of the sensed object relative to the first LOS path in the first time period is a motion direction close to the first LOS path, and the motion direction of the sensed object relative to the second LOS path in the first time period is a motion direction away from the second LOS path, the motion direction of the sensed object in the first time period is moving from the second antenna to the first antenna. In this case, if the relative location between the first antenna and the second antenna is that the first antenna is on the left side of the second antenna, the motion direction of the sensed object in the first time period is moving from right to left.

The receive end may determine the motion direction of the sensed object by comparing Doppler zeros in Doppler-time spectra that are observed via different antennas. For example, the first motion information includes the moment at which the sensed object arrives at the first LOS path in the first time period, and the second motion information includes the moment at which the sensed object arrives at the second LOS path in the first time period. If the moment at which the sensed object arrives at the first LOS path in the first time period is earlier than the moment at which the sensed object arrives at the second LOS path in the first time period (indicating that the sensed object first passes through the first LOS path and then passes through the second LOS path), the motion direction of the sensed object in the first time period is moving from the first antenna to the second antenna. In this case, if the relative location between the first antenna and the second antenna is that the first antenna is on the left side of the second antenna, the motion direction of the sensed object in the first time period is moving from left to right.

Optionally, the motion direction of the sensed object in the first time period may be determined based on values of the first Doppler frequency and the second Doppler frequency at a same time in the first time period. Specifically, if the first Doppler frequency is greater than the second Doppler frequency at a same time in the first time period, and both the first Doppler frequency and the second Doppler frequency decrease with time, the motion direction of the sensed object in the first time period is a direction close to the first LOS path and the second LOS path, and a distance between the sensed object and the second LOS path is less than a distance between the sensed object and the first LOS path. In other words, the motion direction of the sensed object in the first time period is a direction close to the first antenna and the second antenna, and a distance between the sensed object and the second antenna is less than a distance between the sensed object and the first antenna. If the relative location between the first antenna and the second antenna is that the first antenna is on the left side of the second antenna, the motion direction of the sensed object in the first time period is specifically moving from right to left. Optionally, when the Doppler frequency 0 does not exist in the first Doppler frequency and the second Doppler frequency, the motion direction of the sensed object in the first time period may be determined in this manner.

It should be noted that the foregoing uses the first antenna and the second antenna as an example to describe how to determine the motion direction of the sensed object when there are at least two antennas at the receive end. There may be one or more first antennas and one or more second antennas.

In an implementation, the receive end may further determine a quantity of sensed objects based on Doppler information of the sensed objects in the first time period. Specifically, the receive end may determine the quantity of sensed objects with reference to a quantity of high-energy components whose Doppler frequencies increase and/or decrease with time in the first time period. Optionally, the quantity of sensed objects may be greater than or equal to the quantity of high-energy components whose Doppler frequencies increase and/or decrease with time in the first time period. For example, if there are two high-energy components whose Doppler frequencies increase with time in the first time period, and there is no high-energy component whose Doppler frequency decreases with time, the quantity of sensed objects may be greater than or equal to 2. If there is one high-energy component whose Doppler frequency increases with time in the first time period, there is one high-energy component whose Doppler frequency decreases with time, and the high-energy component whose Doppler frequency increases and the high-energy component whose Doppler frequency decreases are discontinuous, the quantity of sensed objects may be greater than or equal to 2.

In an implementation, the Doppler information of the sensed object in the first time period may include Doppler frequencies corresponding to different time moments in the first time period; and that the receive end determines the quantity of sensed objects based on the Doppler information includes: The receive end determines the quantity of sensed objects based on a quantity of V shapes whose Doppler frequencies first decrease to zero and then increase with time in the first time period. In the first time period, the presented V shape whose Doppler frequency first decreases to zero and then increases with time indicates that the sensed object first moves in a direction close to the LOS path, and then moves in a direction away from the LOS path after arriving at the LOS path. The quantity of sensed objects may be greater than or equal to the quantity of V shapes whose Doppler frequencies first decrease to zero and then increase with time in the first time period.

In another implementation, the Doppler information of the sensed object in the first time period may include Doppler frequencies corresponding to different time moments in the first time period; and that the receive end determines a quantity of sensed objects based on the Doppler information includes: The receive end determines the quantity of sensed objects based on the quantity of V shapes whose Doppler frequencies decrease first and then increase with time in the first time period, or the receive end determines the quantity of sensed objects based on a quantity of inverted V shapes whose Doppler frequencies increase first and then decrease with time in the first time period. In the first time period, the presented V shape whose Doppler frequencies decrease first and then increase with time indicates that the sensed object first moves in a direction close to the LOS path, and then moves in a direction away from the LOS path. In the first time period, the presented inverted V shape whose Doppler frequencies increase first and then decrease with time indicates that the sensed object first moves in a direction away from the LOS path, and then moves in a direction close to the LOS path. The quantity of sensed objects may be greater than or equal to the quantity of V shapes whose Doppler frequencies decrease first and then increase with time in the first time period, or the quantity of sensed objects may be greater than or equal to a quantity of inverted V shapes whose Doppler frequencies increase first and then decrease with time in the first time period. Alternatively, the quantity of sensed objects may be greater than or equal to a sum of the quantity of V shapes and the quantity of inverted V shapes.

One V shape (or one inverted V shape) may correspondingly determine at least one sensed object. It should be noted that, even if the Doppler frequency of the high-energy component in the Doppler-time spectrum does not decrease to zero, it may be determined that there is a corresponding sensed object. For example, if there are two V-shaped high-energy components in the Doppler-time spectrum, and time sequences at which Doppler frequencies decrease to the lowest point on the two V-shaped high-energy components are different, it may be determined that there are at least two sensed objects.

Optionally, there may be a one-to-one correspondence between a V shape (or an inverted V shape) and a sensed object. Alternatively, a plurality of sensed objects correspond to a same V shape (or an inverted V shape). It should be noted that a V shape (or an inverted V shape) is correspondingly generated for a motion corresponding to each sensed object, but V shapes (or inverted V shapes) corresponding to different sensed objects may overlap. As a result, Doppler high-energy components corresponding to the different sensed objects in the Doppler-time spectrum that is observed by the antenna cannot be distinguished. In this case, the quantity of sensed objects is greater than the quantity of V shapes (or the quantity of inverted V shapes, or a sum of the quantity of V shapes and the quantity of inverted V shapes). For example, three sensed objects that are close to each other move together (for example, first move in a direction close to the LOS

**EP 4 529 257 A1**

path, and then move in a direction away from the LOS path), and a V shape is correspondingly generated in the Doppler-time spectrum observed by the antenna, instead of three V shapes. In this case, Doppler high-energy components corresponding to the three sensed objects cannot be distinguished.

In this embodiment of this application, if the Doppler high-energy components can be distinguished, the motion direction of the sensed objects may be further determined. Compared with that of determining the quantity of sensed objects in another manner (for example, a subspace type angle estimation manner), by using the method in this embodiment of this application, a motion direction of a large quantity of sensed objects can be determined when a quantity of antennas is very limited. For example, the receive end includes m antennas. If the subspace type angle estimation manner is used, a maximum of m-1 sensed objects are estimated. However, in the manner described in this embodiment of this application, the sensed objects are estimated through a Doppler dimension, a quantity of sensed objects that can be estimated is not limited by a quantity of antennas, and therefore, more sensed objects can be estimated. In addition, a motion direction of the estimated sensed objects can be determined by using Doppler frequencies observed by very limited antennas.

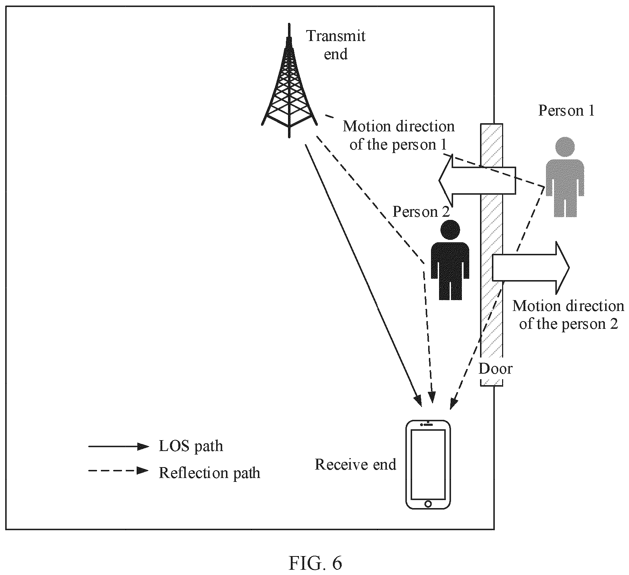

For example, the sensing method in this embodiment of this application may be applied to the scenario shown in FIG. 6. A room includes a transmit end, a receive end, a door, and a sensed object (a person 1 and a person 2 are used as an example). In the scenario shown in FIG. 6, the transmit end and the receive end are arranged at locations close to the door, and whether a person leaves and/or enters the door may be determined by determining a motion direction of the person. Further, whether at least one person exists in the room may be determined with reference to information about whether the person leaves and/or enters the room. Alternatively, with reference to the information about whether the person leaves and/or enters the room, statistics may be collected on one or more of the following information: a quantity of remaining persons in the room, a quantity of persons leaving the room, and a quantity of persons entering the room.

In this embodiment of this application, the motion information of the sensed object is determined based on the signal amplitude information corresponding to the header, so that the signal amplitude information can more accurately reflect the motion information of the sensed object. This helps improve sensing performance.

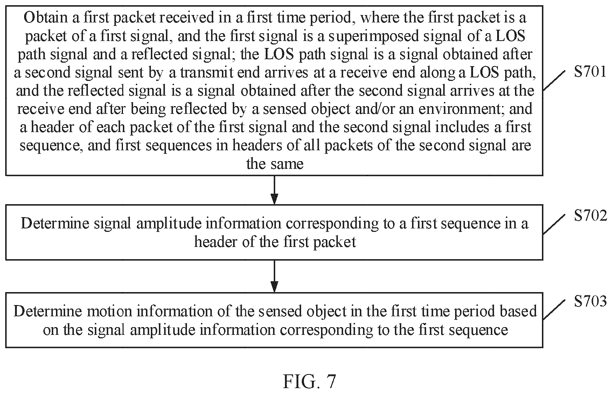

FIG. 7 is a schematic flowchart of another sensing method according to an embodiment of this application. The method describes in detail how to determine signal amplitude information corresponding to a first sequence in a header of a first packet. Step S701 to step S703 are performed by a receive end, or by a chip in a receive end. The following uses an example in which the receive end performs the sensing method for description. As shown in FIG. 7, the method may include but is not limited to the following steps.

Step S701: Obtain a first packet received in a first time period, where the first packet is a packet of a first signal, and the first signal is a superimposed signal of a LOS path signal and a reflected signal; the LOS path signal is a signal obtained after a second signal sent by a transmit end arrives at a receive end along the LOS path, and the reflected signal is a signal obtained after the second signal arrives at the receive end after being reflected by a sensed object and/or an environment; and a header of each packet of the first signal and the second signal includes a first sequence, and first sequences in headers of all packets of the second signal are the same.

Optionally, the first sequence may be a preamble (preamble) sequence.

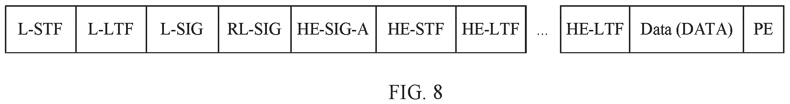

For example, the first packet is a Wi-Fi PPDU. The first sequence may include one or more of the following sequences: a short training field (Short Training Field, STF) sequence and a long training field (Long Training Field, LTF) sequence. For example, the Wi-Fi PPDU is an HE (Wi-Fi 6) SU PPDU. A diagram of a structure of the HE (Wi-Fi 6) SU (single user) PPDU may be shown in FIG. 8. As shown in FIG. 8, the HE SU PPDU includes the following fields: a legacy short training field (Legacy Short Training Field, L-STF), a legacy long training field (Legacy Long Training Field, L-LTF), a legacy signal field (Legacy Signal Field, L-SIG), a repeated legacy signal field (Repeat Legacy Signal Field, RL-SIF), a high efficiency signal field A (High Efficiency Signal Field A, HE-SIG-A), a high efficiency-short training field (High Efficiency-Short Training Field, HE-STF), a high efficiency-long training field (High Efficiency-Long Training Field, HE-LTF), a data (DATA) field, and a padding extension (Padding Extension, PE) field.

Optionally, the STF included in the first sequence may include one or more of the following: an L-STF and an HE-STF. The LTF included in the first sequence may include one or more of the following: an L-LTF and an HE-LTF.

It should be noted that, for another process of performing step S701, reference may be made to the specific description of step S201 in FIG. 2. Details are not described herein.

Step S702: Determine signal amplitude information corresponding to a first sequence in a header of the first packet.

Because the first sequences in the headers of all packets of the second signal are the same, the signal amplitude information corresponding to the first sequence in the header of the first packet is more stable, and the signal amplitude information corresponding to the first sequence in the header of the first packet can better directly reflect motion information of a sensed object. For example, after receiving the first packet, the receive end may separate the first sequence from the header of the first packet, and then extract the signal amplitude information of the first sequence by using a square detector (or another detector).

In an implementation, that the receive end determines the signal amplitude information corresponding to the first sequence in the header of the first packet includes: The receive end samples the first sequence in the header of the first packet, to obtain N sampling values; and determines N first values, where the N first values are N values obtained by performing modulo operations on the N sampling values, or square values of N values, a sum of the N first values is a second value, and the signal amplitude information corresponding to the first sequence is any one of the following: the second value, a square value of the second value, a result of dividing the second value by N, or a result of dividing a square value of the second value by N.

Optionally, the receive end samples the first sequence in the header of the first packet to obtain complex samples, that is, all the N sampling values may be complex samples. The N sampling values are a complex vector. For example, N is 3, and the N sampling values are a sampling value 1, a sampling value 2, and a sampling value 3, respectively. In other words, a complex vector formed by the N sampling values is (a sampling value 1, a sampling value 2, and a sampling value 3). The first value may be obtained by performing the modulo operation on the sampling value or by performing a square operation after the modulo operation is performed. The first value is a real sample, the second value is also a real sample, and the N first values may form a real vector. In the foregoing example, the N first values may be |sampling value 1|, |sampling value 2|, and |sampling value 3|, respectively. In this case, a real vector formed by the N first values is: (|sampling value 1|, |sampling value 2|, |sampling value 3|), and the second value=|sampling value 1|+|sampling value 2|+|sampling value 3|. Alternatively, the N first values may be |sampling value 1|$^2$, |sampling value 2|$^2$, and |sampling value 3|$^2$, respectively. In this case, a real vector formed by the N first values is: (|sampling value 1|$^2$, |sampling value 2|$^2$, |sampling value 3|$^2$), and the second value=|sampling value 1|$^2$+|sampling value 2|$^2$+|sampling value 3|$^2$. The signal amplitude information corresponding to the first sequence is any one of the following: the second value, a square value of the second value, a result of dividing the second value by N, or a result of dividing a square value of the second value by N.

Step S703: Determine the motion information of the sensed object in the first time period based on the signal amplitude information corresponding to the first sequence.

It should be noted that, for an execution process of step S703, reference may be made to the specific description of step S203 in FIG. 2. Details are not described herein.

Next, the signal amplitude information corresponding to the first sequence is observed through simulation experiments 1 to 3. The simulation experiments 1 to 3 all assume that there is a sensed object in a simulation scenario. A simulation experiment 1 simulates signal amplitude information obtained by processing an entire Wi-Fi packet, a simulation experiment 2 simulates signal amplitude information obtained by processing a data part (that is, payload) in the Wi-Fi packet, and a simulation experiment 3 simulates signal amplitude information obtained by processing a preamble sequence in the Wi-Fi packet. For example, the signal amplitude information is signal amplitude information obtained after signal amplitude information corresponding to a LOS path is eliminated. After results of the simulation experiments 1 to 3 are compared, it is obtained that a change effect of the signal amplitude information in a result of the simulation experiment 3 is the most obvious, and change effects of the signal amplitude information in results of the simulation experiment 1 and the simulation experiment 2 is not obvious. Therefore, running information of the sensed object can be reflected more accurately based on the signal amplitude information corresponding to the first sequence. This helps improve sensing performance.

In this embodiment of this application, because the first sequences in the headers of all packets of the second signal are the same, the signal amplitude information corresponding to the first sequence in the header of the first packet is more stable, and the signal amplitude information corresponding to the first sequence in the header of the first packet can better directly reflect the motion information of the sensed object. The motion information of the sensed object is determined based on the signal amplitude information corresponding to the first sequence in the header of the first packet. This helps improve sensing performance.

For example, the receive end is a Wi-Fi sensor, the first signal is a Wi-Fi signal, and the first sequence is a preamble sequence. After receiving the first signal, the receive end processes the first signal to obtain a reflected signal.

It is assumed that the Wi-Fi sensor collects data within an observation time T, $N_P$ is a quantity of Wi-Fi packets (that is, the first packets) received within the time T, and $T_s^{(p)}$ is air interface duration of a $p$th Wi-Fi packet. If a system sampling rate is $f_s$, the $p$th Wi-Fi packet includes $N_s^{(p)}$ samples, and $N_s^{(p)} = T_s^{(p)} f_s$. It is assumed that a signal received by the Wi-Fi sensor includes coherent superposition of components, such as a LOS path, $N_R$ multipaths (reflection from an environment), reflection paths of $N_T$ moving sensed objects, and a thermal noise.

Based on the foregoing assumption, the $l$th sampling of the $p$th packet may be represented by using the following formula (1), and $x_p(l)$ is a discrete complex baseband signal.

$$x_p(l) = \alpha_{0,p} \, d_p(l) + \sum_{r=1}^{N_R} \alpha_{r,p} \, d_p^{(\bar{\tau}_r)}(l) + \sum_{q=1}^{N_T} \beta_{q,p} \, d_p^{(\tau_{q,p})}(l) \, e^{j\varphi_{q,p}(l)} + n_p(l) \tag{1}$$

$$p = 0, \dots, N_P - 1; \; l = 0, \dots, N_s^{(p)} - 1$$

In the formula (1), $\alpha_{0,p}$ is a complex amplitude of a LOS path of a $p^{th}$ packet, and $d_p(l)$ is a transmit signal of the $p^{th}$ packet. $\alpha_{r,p}$ is a complex amplitude of an $r^{th}$ reflection path of the $p^{th}$ packet, and $r = 1, \dots, N_R$. $d_p^{(\bar{\tau}_r)}(l)$ is a signal of a $r^{th}$ reflection path of the $p^{th}$ packet, and a reflection delay of the signal is $\bar{\tau}_r$. $\beta_{q,p}$ is a complex amplitude of a $q^{th}$ reflection path of the $p^{th}$ packet, and q = 1, $\dots$, $N_T$. $d_p^{(\tau_{q,p})}(l)$ is a signal of a reflection path of a $q^{th}$ sensed object of the $p^{th}$ packet, and a reflection delay of the signal is $\tau_{q,p}$. $e^{j\varphi_{q,p}(l)}$ is phase information corresponding to Doppler information of the reflection path. $n_p(l)$ is a thermal noise when a receiver receives the $p^{th}$ packet.

After receiving $x_p(l)$, the receive end separates a first sequence $y_p(l)$ from a header of $x_p(l)$, and then extracts amplitude information of the first sequence by using a square detector (or another detector).

For example, if the first value is a square value (that is, energy) of a value obtained by performing a modulo operation on the sampling value, a result of extracting the amplitude information is a first value $\mu_p(l)$ described in a formula (2).

$$\mu_p(l) = \left| y_p(l) \right|^2 \tag{2}$$

$$p = 0, \dots, N_P - 1; \; l = 0, \dots, N_s^{(p)} - 1$$

When the first signal is the Wi-Fi signal, amplitude detection may be applied to a packet level (that is, an amplitude result is output for each Wi-Fi PPDU), and then energy corresponding to each packet may be summed up to obtain a second value $\zeta(p)$. Refer to a formula (3). Amplitude information is calculated by using each Wi-Fi PPDU, so that a sampling rate falls within a proper range, and calculation can be directly performed by using a PPDU obtained through sampling, without further sampling.

$$\zeta(p) = \sum_{l=0}^{N_s^{(p)}-1} \mu_p(l) \tag{3}$$

$$p = 0, \dots, N_P - 1$$

For example, if the signal amplitude information corresponding to the first sequence is $\zeta(p)$, direct path cancellation may be performed on $\zeta(p)$ to eliminate a strong direct path signal (that is, signal amplitude information corresponding to the LOS path signal is removed from $\zeta(p)$), so as to obtain signal amplitude information $\phi(p)$ corresponding to the reflected signal. Refer to formula (4).

$$\phi(p) = \zeta(p) - \bar{\zeta} \tag{4}$$

In formula (4), $\bar{\zeta}$ represents an average of $\zeta(p)$.

Next, the receive end may perform time-frequency analysis processing (for example, STFT) on $\phi(p)$, and further determine the motion information of the sensed object based on Doppler information obtained after the time-frequency analysis processing.

Optionally, if a sending time interval between packets sent by the transmit end is stable, the time-frequency analysis processing may be STFT, FFT, or the like. If the sending time interval between the packets sent by the transmit end is unstable (for example, sending time intervals between Wi-Fi packets are uneven), before performing time-frequency analysis processing, the receive end may perform interpolation in time domain, so that sampling intervals are equal. In this manner, background noise generated by time-frequency analysis is reduced. When a sending time interval between packets sent by the transmit end is unstable, if time-domain interpolation is not performed, but time-frequency analysis processing is directly performed by using STFT or FFT, background noise after Fourier transform is large. It is also verified through actual measurement that when the sending time interval between the packets sent by the transmit end is unstable, compared with that when time-domain interpolation is not performed, background noise after Fourier transform can be lower when time-domain interpolation is performed.

The following simulation experiment results may indicate that background noise of time-frequency analysis can be reduced based on the signal amplitude information corresponding to the first sequence. This helps improve sensing performance.

Simulation experiment 4: If there is no sensed object in a simulation scenario, a background noise result is obtained by processing an entire Wi-Fi packet, and a background noise result is obtained by processing only a preamble sequence row in the Wi-Fi packet.

The results of the simulation experiment 4 show that in different direct signal to noise ratios (Direct signal to Noise Ratio, DNR), it is clear that the background noise obtained by processing only the preamble sequence in the Wi-Fi packet is lower than that obtained by processing the entire Wi-Fi packet. Especially in a high DNR scenario, a background noise is reduced more significantly.

Simulation experiment 5: If there is a sensed object in a simulation scenario, a background noise result is obtained by processing an entire Wi-Fi packet, and a background noise result is obtained by processing only a preamble sequence row in the Wi-Fi packet.

A result of the simulation experiment 5 shows that in different DNRs, it is clear that the background noise obtained by processing only the preamble sequence in the Wi-Fi packet is lower than that obtained by processing the entire Wi-Fi packet. Especially in a high DNR scenario, a background noise is reduced more significantly.

In a Doppler-time spectrum result of the simulation experiment 5, in addition to the background noise, a Doppler component of the sensed object is also included. There is differentiation between the Doppler component of the sensed object and the background noise. In this case, the Doppler component of the sensed object may be determined from the Doppler-time spectrum.

In the foregoing simulation experiment, one LOS path and one reflection path are used as an example. In an actual situation, a plurality of strong static multipaths may be included. Simulation experiment 3 describes the simulation experiment result when there is the strong static multipath. The strong static multipath means that relative to a reflection path corresponding to a sensed object, strength of a reflection path of an environment is high. In a simulation experiment, a clutter to noise ratio (Clutter to Noise Ratio, CNR) may be set to simulate a scenario in which there is the strong static multipath.

Simulation experiment 6: If there is a strong static multipath in a simulation scenario, a background noise result is obtained by processing an entire Wi-Fi packet, and a background noise result is obtained by processing only a preamble sequence row in the Wi-Fi packet.

A result of the simulation experiment 6 shows that: when there is a strong static multipath, regardless of whether a sensed object exists in the simulation scenario, it is clear that the background noise obtained by processing only the preamble sequence in the Wi-Fi packet is lower than that obtained by processing the entire Wi-Fi packet.

In the foregoing embodiments provided in this application, the method provided in embodiments of this application is described. To implement the functions in the method provided in embodiments of this application, the receive end may include a hardware structure and a software module, to implement the foregoing functions in a form of the hardware structure, the software module, or a combination of the hardware structure and the software module. One of the foregoing functions may be performed in the form of the hardware structure, the software module, or the combination of the hardware structure and the software module.

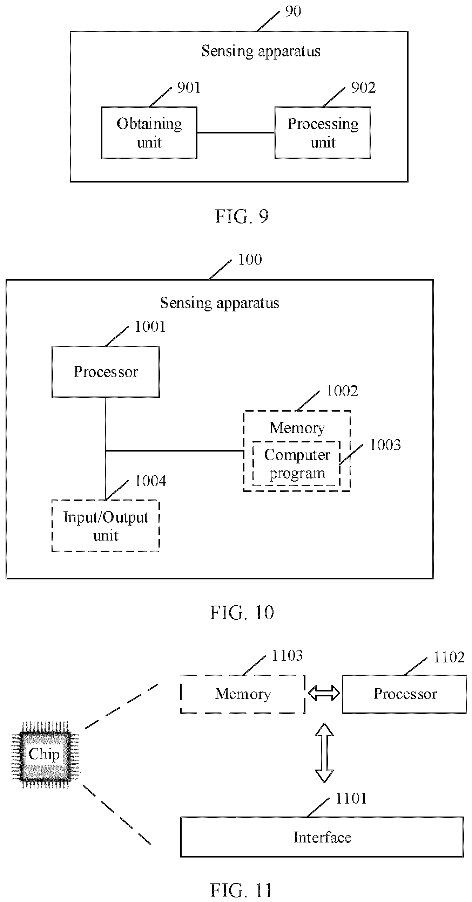

FIG. 9 is a diagram of a structure of a sensing apparatus 90 according to an embodiment of this application. The sensing apparatus 90 shown in FIG. 9 may include an obtaining unit 901 and a processing unit 902. Optionally, the obtaining unit 901 may include a communication interface, for example, a sending unit and/or a receiving unit. The sending unit is configured to implement a sending function, the receiving unit is configured to implement a receiving function, and the obtaining unit 901 may implement a sending function and/or a receiving function. The obtaining unit may also be described as a transceiver unit.

The sensing apparatus 90 may be a receive end, or may be an apparatus in a receive end, or may be an apparatus that can be used in matching with a receive end. The receive end may be a terminal device or a network device.

The obtaining unit 901 is configured to obtain a first packet received in a first time period.

The processing unit 902 is configured to: determine signal amplitude information corresponding to a header of a first packet, and determine motion information of a sensed object in the first time period based on the signal amplitude information.

In an implementation, the first packet is a packet of a first signal, and the first signal is a superimposed signal of a line of sight LOS path signal and a reflected signal, where the LOS path signal is a signal obtained after a second signal sent by a transmit end arrives at a receive end along a LOS path, and the reflected signal is a signal obtained after the second signal arrives at the receive end after being reflected by the sensed object and/or an environment.

In an implementation, a header of each packet of the first signal and the second signal includes a first sequence, and first sequences in headers of all packets of the second signal are the same; and when being configured to determine the signal amplitude information corresponding to the header of the first packet, the processing unit 902 is specifically configured to determine signal amplitude information corresponding to a first sequence in the header of the first packet.

In an implementation, when being configured to determine the signal amplitude information corresponding to the first sequence in the header of the first packet, the processing unit 902 is specifically configured to: sample the first sequence in the header of the first packet, to obtain N sampling values; and determine N first values, where the N first values are N values obtained by performing modulo operations on the N sampling values or square values of N values, and a sum of the N first values is a second value, where the signal amplitude information corresponding to the first sequence is any one of the following: the second value, a square value of the second value, a result of dividing the second value by N, or a result of dividing a square value of the second value by N.

In an implementation, when being configured to determine the motion information of the sensed object in the first time period based on the signal amplitude information, the processing unit 902 is specifically configured to: remove signal amplitude information corresponding to the LOS path signal from the signal amplitude information, to obtain signal amplitude information corresponding to the reflected signal; and determine the motion information of the sensed object in the first time period based on the signal amplitude information corresponding to the reflected signal.

In an implementation, when being configured to determine the motion information of the sensed object in the first time period based on the signal amplitude information corresponding to the reflected signal, the processing unit 902 is specifically configured to: perform time-frequency analysis processing on the signal amplitude information corresponding to the reflected signal to obtain Doppler information of the sensed object in the first time period; and determine the motion information of the sensed object in the first time period based on the Doppler information of the sensed object in the first time period.

In an implementation, the motion information of the sensed object in the first time period includes one or more of the following: a motion direction of the sensed object in the first time period; and information about whether the sensed object arrives at the LOS path in the first time period.

In an implementation, the receive end includes a first antenna and a second antenna, and the Doppler information includes a first Doppler frequency observed via the first antenna and a second Doppler frequency observed via the second antenna. The LOS paths include a first LOS path between the transmit end and the first antenna and a second LOS path between the transmit end and the second antenna. When being configured to determine the motion information of the sensed object in the first time period based on the Doppler information of the sensed object in the first time period, the processing unit 902 is specifically configured to: determine the motion direction of the sensed object in the first time period based on first motion information of the sensed object relative to the first LOS path and second motion information of the sensed object relative to the second LOS path in the first time period, and a relative location between the first antenna and the second antenna, where the first motion information is determined based on the first Doppler frequency, and the second motion information is determined based on the second Doppler frequency.

In an implementation, the first motion information includes a moment at which the sensed object arrives at the first LOS path in the first time period, and the second motion information includes a moment at which the sensed object arrives at the second LOS path in the first time period.

In an implementation, the processing unit 902 is further configured to determine a quantity of sensed objects based on the Doppler information.

In an implementation, the Doppler information includes Doppler frequencies corresponding to different time moments in the first time period; and when being configured to determine the quantity of sensed objects based on the Doppler information, the processing unit 902 is specifically configured to determine the quantity of sensed objects based on a quantity of V shapes whose Doppler frequencies decrease first and then increase with time in the first time period.

In an implementation, the Doppler information includes Doppler frequencies corresponding to different time moments in the first time period; and if Doppler frequencies decrease with time in a second time period, a motion direction of the sensed object in the second time period is a direction close to the LOS path, where the second time period is included in the first time period; or if Doppler frequencies increase with time in a second time period, a motion direction of the sensed object in the second time period is a direction away from the LOS path.

In an implementation, the first sequence is a preamble sequence.

When being the receive end, the sensing apparatus 90 is configured to implement functions of the receive end in the embodiments corresponding to FIG. 2 and FIG. 7.

FIG. 10 is a diagram of a structure of another sensing apparatus 100 according to an embodiment of this application. The sensing apparatus 100 may be a receive end, or may be a chip, a chip system, a processor, or the like that supports a receive end in implementing the foregoing method. The apparatus may be configured to implement the method described in the foregoing method embodiment. For details, refer to the descriptions in the foregoing method embodiment.

The sensing apparatus 100 may include one or more processors 1001. The processor 1001 may be a general-purpose processor, a dedicated processor, or the like. For example, the processor 1501 may be a baseband processor or a central processing unit. The baseband processor may be configured to process a communication protocol and communication data. The central processing unit may be configured to: control the sensing apparatus (for example, a base station, a baseband chip, a terminal, a terminal chip, a DU, or a CU), execute a computer program, and process data of the computer program.

Optionally, the sensing apparatus 100 may include one or more memories 1002, where a computer program 1003 may be stored on the memories 1002, and the computer program may be run on the sensing apparatus 100, so that the sensing apparatus 100 performs the method described in the foregoing method embodiments. Optionally, the memory 1002 may further store data. The memory 1002 may be separately disposed, or may be integrated with the processor 1001. Optionally, the computer program 1003 may be further built into the processor 1001.

Optionally, the sensing apparatus 100 may further include an input/output unit 1004. The input/output unit 1004 may include but is not limited to the following implementation forms: an input/output interface, a transceiver unit, a transceiver, a transceiver machine, a transceiver circuit, or the like, and is configured to implement a transceiver function. The input/output unit 1004 may include an input unit and an output unit. The input unit may be a receiver machine, a receiver, a receiver circuit, or the like, and is configured to implement a receiving function. The output unit may be a transmitter machine, a transmitter, an output circuit, a transmitter circuit, or the like, and is configured to implement an output function and/or a sending function. The input unit and the output unit that are configured to implement receiving and sending functions may be separated, or may be integrated together. The input unit and the output unit may be configured to read and write code/data, or may be configured to transmit or transfer a signal. In an implementation, the input/output unit 1004 may be separately disposed, or may be integrated with the processor 1001.

The input/output unit 1004 is configured to obtain a first packet received in a first time period.

The processor 1001 is configured to: determine signal amplitude information corresponding to a header of the first packet; and determine motion information of a sensed object in the first time period based on the signal amplitude information.

In an implementation, the first packet is a packet of a first signal, and the first signal is a superimposed signal of a line of sight LOS path signal and a reflected signal, where the LOS path signal is a signal obtained after a second signal sent by a transmit end arrives at a receive end along a LOS path, and the reflected signal is a signal obtained after the second signal arrives at the receive end after being reflected by the sensed object and/or an environment.

In an implementation, a header of each packet of the first signal and the second signal includes a first sequence, and first sequences in headers of all packets of the second signal are the same. When being configured to determine the signal amplitude information corresponding to the header of the first packet, the processor 1001 is specifically configured to determine the signal amplitude information corresponding to the first sequence in the header of the first packet.

In an implementation, when being configured to determine the signal amplitude information corresponding to the first sequence in the header of the first packet, the processor 1001 is specifically configured to: sample the first sequence in the header of the first packet, to obtain N sampling values; and determine N first values, where the N first values are N values obtained by performing modulo operations on the N sampling values or square values of N values, and a sum of the N first values is a second value, where the signal amplitude information corresponding to the first sequence is any one of the following: the second value, a square value of the second value, a result of dividing the second value by N, or a result of dividing a square value of the second value by N.

In an implementation, when being configured to determine the motion information of the sensed object in the first time period based on the signal amplitude information, the processor 1001 is specifically configured to: remove signal amplitude information corresponding to the LOS path signal from the signal amplitude information, to obtain signal amplitude information corresponding to the reflected signal; and determine the motion information of the sensed object in the first time period based on the signal amplitude information corresponding to the reflected signal.

In an implementation, when being configured to determine the motion information of the sensed object in the first time period based on the signal amplitude information corresponding to the reflected signal, the processor 1001 is specifically configured to: perform time-frequency analysis processing on the signal amplitude information corresponding to the reflected signal to obtain Doppler information of the sensed object in the first time period; and determine the motion information of the sensed object in the first time period based on the Doppler information of the sensed object in the first time period.

In an implementation, the motion information of the sensed object in the first time period includes one or more of the following: a motion direction of the sensed object in the first time period; and information about whether the sensed object arrives at the LOS path in the first time period.

In an implementation, the receive end includes a first antenna and a second antenna, and the Doppler information includes a first Doppler frequency observed via the first antenna and a second Doppler frequency observed via the second antenna. The LOS paths include a first LOS path between the transmit end and the first antenna and a second LOS path between the transmit end and the second antenna. When being configured to determine the motion information of the sensed object in the first time period based on the Doppler information of the sensed object in the first time period, the processor 1001 is specifically configured to: determine the motion direction of the sensed object in the first time period based on first motion information of the sensed object relative to the first LOS path and second motion information of the sensed object relative to the second LOS path in the first time period, and a relative location between the first antenna and the second antenna, where the first motion information is determined based on the first Doppler frequency, and the second motion information is determined based on the second Doppler frequency.

In an implementation, the first motion information includes a moment at which the sensed object arrives at the first LOS path in the first time period, and the second motion information includes a moment at which the sensed object arrives at the second LOS path in the first time period.

In an implementation, the processor 1001 is further configured to determine a quantity of sensed objects based on the Doppler information.

In an implementation, the Doppler information includes Doppler frequencies corresponding to different time moments in the first time period; and when being configured to determine the quantity of sensed objects based on the Doppler information, the processor 1001 is specifically configured to determine the quantity of sensed objects based on a quantity of V shapes whose Doppler frequencies decrease first and then increase with time in the first time period.

In an implementation, the Doppler information includes Doppler frequencies corresponding to different time moments in the first time period; and if Doppler frequencies decrease with time in a second time period, a motion direction of the sensed object in the second time period is a direction close to the LOS path, where the second time period is included in the first time period; or if Doppler frequencies increase with time in a second time period, a motion direction of the sensed object in the second time period is a direction away from the LOS path.

In an implementation, the first sequence is a preamble sequence.

In an implementation, the sensing apparatus 100 may include a circuit, and the circuit may implement a sending, receiving, or communication function in the foregoing method embodiments. The processor described in this application may be implemented in the following manner: an integrated circuit (integrated circuit, IC), an analog IC, a radio frequency integrated circuit (RFIC), a mixed-signal IC, an application-specific integrated circuit (application-specific integrated circuit, ASIC), a printed circuit board (printed circuit board, PCB), an electronic device, or the like. The processor may alternatively be manufactured by using the following IC process technology, for example, a complementary metal oxide semiconductor (complementary metal oxide semiconductor, CMOS), an N-channel metal oxide semiconductor (N-channel metal oxide semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

The sensing apparatus described in the foregoing embodiments may be a receive end. However, a scope of the sensing apparatus described in this application is not limited thereto, and a structure of the sensing apparatus may not be limited by FIG. 10. The sensing apparatus may be an independent device or may be a part of a large device. For example, the sensing apparatus may be:

(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

For a case in which the sensing apparatus may be a chip or a chip system, refer to a diagram of a structure of a chip shown in FIG. 11. The chip shown in FIG. 11 includes an interface 1101 and a processor 1102. There may be one or more interfaces 1101, and there may be a plurality of processors 1102.

The interface 1101 is configured to obtain a first packet received in a first time period.

The processor 1102 is configured to: determine signal amplitude information corresponding to a header of the first packet; and determine motion information of a sensed object in the first time period based on the signal amplitude information.

In an implementation, the first packet is a packet of a first signal, and the first signal is a superimposed signal of a line of sight LOS path signal and a reflected signal, where the LOS path signal is a signal obtained after a second signal sent by a transmit end arrives at a receive end along a LOS path, and the reflected signal is a signal obtained after the second signal arrives at the receive end after being reflected by the sensed object and/or an environment.

In an implementation, a header of each packet of the first signal and the second signal includes a first sequence, and first sequences in headers of all packets of the second signal are the same. When being configured to determine the signal amplitude information corresponding to the header of the first packet, the processor 1102 is specifically configured to determine the signal amplitude information corresponding to the first sequence in the header of the first packet.

In an implementation, when being configured to determine the signal amplitude information corresponding to the first sequence in the header of the first packet, the processor 1102 is specifically configured to sample the first sequence in the header of the first packet, to obtain N sampling values; and determine N first values, where the N first values are N values obtained by performing modulo operations on the N sampling values or square values of N values, and a sum of the N first values is a second value, where the signal amplitude information corresponding to the first sequence is any one of the following: the second value, a square value of the second value, a result of dividing the second value by N, or a result of dividing a square value of the second value by N.

In an implementation, when being configured to determine the motion information of the sensed object in the first time period based on the signal amplitude information, the processor 1102 is specifically configured to: remove signal amplitude information corresponding to the LOS path signal from the signal amplitude information, to obtain signal amplitude information corresponding to the reflected signal; and determine the motion information of the sensed object in the first time period based on the signal amplitude information corresponding to the reflected signal.

In an implementation, when being configured to determine the motion information of the sensed object in the first time period based on the signal amplitude information corresponding to the reflected signal, the processor 1102 is specifically configured to: perform time-frequency analysis processing on the signal amplitude information corresponding to the reflected signal to obtain Doppler information of the sensed object in the first time period; and determine the motion information of the sensed object in the first time period based on the Doppler information of the sensed object in the first time period.

In an implementation, the motion information of the sensed object in the first time period includes one or more of the following: a motion direction of the sensed object in the first time period; and information about whether the sensed object arrives at the LOS path in the first time period.

In an implementation, the receive end includes a first antenna and a second antenna, and the Doppler information includes a first Doppler frequency observed via the first antenna and a second Doppler frequency observed via the second antenna. The LOS paths include a first LOS path between the transmit end and the first antenna and a second LOS path between the transmit end and the second antenna. When being configured to determine the motion information of the sensed object in the first time period based on the Doppler information of the sensed object in the first time period, the processor 1102 is specifically configured to: determine the motion direction of the sensed object in the first time period based on first motion information of the sensed object relative to the first LOS path and second motion information of the sensed object relative to the second LOS path in the first time period, and a relative location between the first antenna and the second antenna, where the first motion information is determined based on the first Doppler frequency, and the second motion information is determined based on the second Doppler frequency.

In an implementation, the first motion information includes a moment at which the sensed object arrives at the first LOS path in the first time period, and the second motion information includes a moment at which the sensed object arrives at the second LOS path in the first time period.

In an implementation, the processor 1102 is further configured to determine a quantity of sensed objects based on the Doppler information.

In an implementation, the Doppler information includes Doppler frequencies corresponding to different time moments in the first time period; and when being configured to determine the quantity of sensed objects based on the Doppler information, the processor 1102 is specifically configured to determine the quantity of sensed objects based on a quantity of V shapes whose Doppler frequencies decrease first and then increase with time in the first time period.

In an implementation, the Doppler information includes Doppler frequencies corresponding to different time moments in the first time period; and if Doppler frequencies decrease with time in a second time period, a motion direction of the sensed object in the second time period is a direction close to the LOS path, where the second time period is included in the first time period; or if Doppler frequencies increase with time in a second time period, a motion direction of the sensed object in the second time period is a direction away from the LOS path.

In an implementation, the first sequence is a preamble sequence.

Optionally, the chip further includes a memory 1103, and the memory 1103 is configured to store a necessary computer program and data. The memory 1103 may be separately disposed, or may be integrated with the processor 1102.

A person skilled in the art may further understand that various illustrative logical blocks (illustrative logic block) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium, where the computer-readable storage medium stores a computer program, and the computer program includes program instructions. When the program instructions are executed by a computer, a function in any one of the foregoing method embodiments is implemented.

The computer-readable storage medium includes but is not limited to a flash memory, a hard disk, and a solid-state drive.

This application further provides a computer program product. When the computer program product is executed by a computer, functions of any one of the foregoing method embodiments are implemented.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs. When the computer program is loaded and executed on the computer, the procedure or functions according to embodiments of this application are all or partially generated. The computer may be a general-purpose computer, a dedicated computer, a computer network, or other programmable apparatuses. The computer program may be stored in a computer-readable storage medium or may be transmitted from a computer-readable storage medium to another computer-readable storage medium. For example, the computer program may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It may be understood that "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It may be understood that, in this application, "when", "if", and "in case of" all mean that an apparatus performs corresponding processing in an objective case, are not intended to limit time, does not need the apparatus to necessarily have a determining action during implementation, and do not mean that there is another limitation.

A person of ordinary skill in the art may understand that various numbers such as first and second in this application are merely used for differentiation for ease of description, and are not used to limit the scope of embodiments of this application or represent an order.

In this application, "at least one" may alternatively be described as "one or more", and "a plurality of" may be two, three, four, or more. This is not limited in this application. In embodiments of this application, "first", "second", "third", "A", "B", "C", "D", and the like are used for distinguishing between technical features described by them. There is no chronological order or no size order between the technical features described by "first", "second", "third", "A", "B", "C", and "D".

In addition, the terms "system" and "network" may be used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural.

The correspondences shown in the tables in this application may be configured, or may be predefined. Values of the information in the tables are merely examples, and other values may be configured. This is not limited in this application. When a correspondence between the information and the parameters is configured, not all the correspondences shown in the tables need to be configured. For example, in the tables in this application, correspondences shown in some rows may alternatively not be configured. For another example, proper deformations and adjustments such as splitting and combination may be performed based on the foregoing tables. Names of parameters shown in titles of the foregoing tables may alternatively be other names that can be understood by a sensing apparatus, and values or representation manners of the parameters may alternatively be other values or representation manners that can be understood by the sensing apparatus. During implementation of the foregoing tables, another data structure, such as an array, a queue, a container, a stack, a linear table, a pointer, a linked list, a tree, a graph, a structure, a class, a pile, or a hash table, may alternatively be used.

"Predefine" in this application may be understood as "define", "predefine", "store", "pre-store", "pre-negotiate", "pre-configure", "solidify", or "pre-burn".

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein.

For same or similar parts in embodiments of this application, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sensing method, wherein the method comprises:

   obtaining a first packet received in a first time period;
   determining signal amplitude information corresponding to a header of the first packet; and
   determining motion information of a sensed object in the first time period based on the signal amplitude information.

2. The method according to claim 1, wherein
   the first packet is a packet of a first signal, and the first signal is a superimposed signal of a line of sight LOS path signal and a reflected signal, wherein the LOS path signal is a signal obtained after a second signal sent by a transmit end arrives at a receive end along a LOS path, and the reflected signal is a signal obtained after the second signal arrives at the receive end after being reflected by the sensed object and/or an environment.

3. The method according to claim 2, wherein a header of each packet of the first signal and the second signal comprises a first sequence, and first sequences in headers of all packets of the second signal are the same; and the determining signal amplitude information corresponding to a header of the first packet comprises:
   determining signal amplitude information corresponding to a first sequence in the header of the first packet.

4. The method according to claim 3, wherein the determining signal amplitude information corresponding to a first sequence in the header of the first packet comprises:

   sampling the first sequence in the header of the first packet to obtain N sampling values; and
   determining N first values, wherein the N first values are N values obtained by performing modulo operations on the N sampling values or square values of N values, and a sum of the N first values is a second value, wherein the signal amplitude information corresponding to the first sequence is any one of the following: the second value, a square value of the second value, a result of dividing the second value by N, or a result of dividing a square value of the second value by N.

5. The method according to any one of claims 2 to 4, wherein the determining motion information of a sensed object in the first time period based on the signal amplitude information comprises:

   removing signal amplitude information corresponding to the LOS path signal from the signal amplitude information, to obtain signal amplitude information corresponding to the reflected signal; and
determining the motion information of the sensed object in the first time period based on the signal amplitude information corresponding to the reflected signal.

6. The method according to claim 5, wherein the determining the motion information of the sensed object in the first time period based on the signal amplitude information corresponding to the reflected signal comprises:

performing time-frequency analysis processing on the signal amplitude information corresponding to the reflected signal to obtain Doppler information of the sensed object in the first time period; and
determining the motion information of the sensed object in the first time period based on the Doppler information of the sensed object in the first time period.

7. The method according to claim 6, wherein the motion information of the sensed object in the first time period comprises one or more of the following:

a motion direction of the sensed object in the first time period; and
information about whether the sensed object arrives at the LOS path in the first time period.

8. The method according to claim 6 or 7, wherein the receive end comprises a first antenna and a second antenna; the Doppler information comprises a first Doppler frequency observed via the first antenna and a second Doppler frequency observed via the second antenna; and the LOS paths comprise a first LOS path between the transmit end and the first antenna and a second LOS path between the transmit end and the second antenna; and
the determining the motion information of the sensed object in the first time period based on the Doppler information of the sensed object in the first time period comprises:

determining the motion direction of the sensed object in the first time period based on first motion information of the sensed object relative to the first LOS path and second motion information of the sensed object relative to the second LOS path that are in the first time period, and based on a relative location between the first antenna and the second antenna, wherein
the first motion information is determined based on the first Doppler frequency, and the second motion information is determined based on the second Doppler frequency.

9. The method according to claim 8, wherein the first motion information comprises a moment at which the sensed object arrives at the first LOS path in the first time period, and the second motion information comprises a moment at which the sensed object arrives at the second LOS path in the first time period.

10. The method according to any one of claims 6 to 9, wherein the method further comprises: determining a quantity of sensed objects based on the Doppler information.

11. The method according to claim 10, wherein the Doppler information comprises Doppler frequencies corresponding to different time moments in the first time period; and
the determining a quantity of sensed objects based on the Doppler information comprises:
determining the quantity of sensed objects based on a quantity of V shapes whose Doppler frequencies decrease first and then increase with time in the first time period.

12. The method according to claim 7, wherein the Doppler information comprises Doppler frequencies corresponding to different time moments in the first time period; and

if Doppler frequencies decrease with time in a second time period, a motion direction of the sensed object in the second time period is a direction close to the LOS path, wherein the second time period is comprised in the first time period; or
if Doppler frequencies increase with time in a second time period, a motion direction of the sensed object in the second time period is a direction away from the LOS path.

13. The method according to claim 3, wherein the first sequence is a preamble sequence.

14. A sensing apparatus, comprising an obtaining unit and a processing unit, wherein

the obtaining unit is configured to obtain a first packet received in a first time period; and

the processing unit is configured to: determine signal amplitude information corresponding to a header of the first packet, and determine motion information of a sensed object in the first time period based on the signal amplitude information.

15. The apparatus according to claim 14, wherein

the first packet is a packet of a first signal, and the first signal is a superimposed signal of a line of sight LOS path signal and a reflected signal, wherein the LOS path signal is a signal obtained after a second signal sent by a transmit end arrives at a receive end along a LOS path, and the reflected signal is a signal obtained after the second signal arrives at the receive end after being reflected by the sensed object and/or an environment.

16. The apparatus according to claim 15, wherein a header of each packet of the first signal and the second signal comprises a first sequence, and first sequences in headers of all packets of the second signal are the same; and when being configured to determine the signal amplitude information corresponding to the header of the first packet, the processing unit is specifically configured to determine signal amplitude information corresponding to a first sequence in the header of the first packet.

17. The apparatus according to claim 16, wherein when being configured to determine the signal amplitude information corresponding to the first sequence in the header of the first packet, the processing unit is specifically configured to sample the first sequence in the header of the first packet, to obtain N sampling values; and determine N first values, wherein the N first values are N values obtained by performing modulo operations on the N sampling values or square values of N values, and a sum of the N first values is a second value, wherein

the signal amplitude information corresponding to the first sequence is any one of the following: the second value, a square value of the second value, a result of dividing the second value by N, or a result of dividing a square value of the second value by N.

18. The apparatus according to any one of claims 15 to 17, wherein when being configured to determine the motion information of the sensed object in the first time period based on the signal amplitude information, the processing unit is specifically configured to: remove signal amplitude information corresponding to the LOS path signal from the signal amplitude information, to obtain signal amplitude information corresponding to the reflected signal; and determine the motion information of the sensed object in the first time period based on the signal amplitude information corresponding to the reflected signal.

19. The apparatus according to claim 18, wherein when being configured to determine the motion information of the sensed object in the first time period based on the signal amplitude information corresponding to the reflected signal, the processing unit is specifically configured to: perform time-frequency analysis processing on the signal amplitude information corresponding to the reflected signal to obtain Doppler information of the sensed object in the first time period; and determine the motion information of the sensed object in the first time period based on the Doppler information of the sensed object in the first time period.

20. The apparatus according to claim 19, wherein the motion information of the sensed object in the first time period comprises one or more of the following:

a motion direction of the sensed object in the first time period; and

information about whether the sensed object arrives at the LOS path in the first time period.

21. The apparatus according to claim 19 or 20, wherein the receive end comprises a first antenna and a second antenna; the Doppler information comprises a first Doppler frequency observed via the first antenna and a second Doppler frequency observed via the second antenna; and the LOS paths comprise a first LOS path between the transmit end and the first antenna and a second LOS path between the transmit end and the second antenna; and

when being configured to determine the motion information of the sensed object in the first time period based on the Doppler information of the sensed object in the first time period, the processing unit is specifically configured to: determine the motion direction of the sensed object in the first time period based on first motion information of the sensed object relative to the first LOS path and second motion information of the sensed object relative to the second LOS path in the first time period, and a relative location between the first antenna and the second antenna, wherein

the first motion information is determined based on the first Doppler frequency, and the second motion information is determined based on the second Doppler frequency.

22. The apparatus according to claim 21, wherein the first motion information comprises a moment at which the sensed object arrives at the first LOS path in the first time period, and the second motion information comprises a moment at which the sensed object arrives at the second LOS path in the first time period.

23. The apparatus according to any one of claims 19 to 22, wherein the processing unit is further configured to determine a quantity of sensed objects based on the Doppler information.

24. The apparatus according to claim 23, wherein the Doppler information comprises Doppler frequencies corresponding to different time moments in the first time period; and
when being configured to determine the quantity of sensed objects based on the Doppler information, the processing unit is specifically configured to determine the quantity of sensed objects based on a quantity of V shapes whose Doppler frequencies decrease first and then increase with time in the first time period.

25. The apparatus according to claim 20, wherein the Doppler information comprises Doppler frequencies corresponding to different time moments in the first time period; and

if Doppler frequencies decrease with time in a second time period, a motion direction of the sensed object in the second time period is a direction close to the LOS path, wherein the second time period is comprised in the first time period; or
if Doppler frequencies increase with time in a second time period, a motion direction of the sensed object in the second time period is a direction away from the LOS path.

26. The apparatus according to claim 16, wherein the first sequence is a preamble sequence.

27. A sensing apparatus, wherein the apparatus comprises a processor and a memory, the memory stores program instructions, and the processor executes the program instructions stored in the memory, so that the apparatus performs the method according to any one of claims 1 to 13.

28. A computer-readable storage medium, wherein the computer-readable storage medium stores a computer program, the computer program comprises program instructions, and when the program instructions are executed by a sensing apparatus, the method according to any one of claims 1 to 13 is performed.

29. A computer program product, wherein the computer program product comprises program instructions, and when the program instructions are executed by a sensing apparatus, the method according to any one of claims 1 to 13 is performed.

FIG. 1

| | |
|---|---|
| Obtain a first packet received in a first time period | S201 |
| Determine signal amplitude information corresponding to a header of the first packet | S202 |
| Determine motion information of a sensed object in the first time period based on the signal amplitude information | S203 |

FIG. 2

FIG. 3

FIG. 4

FIG. 5

FIG. 6

Obtain a first packet received in a first time period, where the first packet is a packet of a first signal, and the first signal is a superimposed signal of a LOS path signal and a reflected signal; the LOS path signal is a signal obtained after a second signal sent by a transmit end arrives at a receive end along a LOS path, and the reflected signal is a signal obtained after the second signal arrives at the receive end after being reflected by a sensed object and/or an environment; and a header of each packet of the first signal and the second signal includes a first sequence, and first sequences in headers of all packets of the second signal are the same

S701

Determine signal amplitude information corresponding to a first sequence in a header of the first packet

S702

Determine motion information of the sensed object in the first time period based on the signal amplitude information corresponding to the first sequence

S703

FIG. 7

| L-STF | L-LTF | L-SIG | RL-SIG | HE-SIG-A | HE-STF | HE-LTF | ... | HE-LTF | Data (DATA) | PE |

FIG. 8

90

Sensing apparatus

901

Obtaining unit

902

Processing unit

FIG. 9

100

Sensing apparatus

1001

Processor

1002

Memory

1003

Computer program

1004

Input/Output unit

FIG. 10

1103

Memory

1102

Processor

Chip

1101

Interface

FIG. 11

# EP 4 529 257 A1

<table>
<tr><td colspan="2">INTERNATIONAL SEARCH REPORT</td><td colspan="2">International application No.<br>**PCT/CN2023/095075**</td></tr>
</table>

**A.    CLASSIFICATION OF SUBJECT MATTER**

H04W 24/08(2009.01)i

According to International Patent Classification (IPC) or to both national classification and IPC

**B.    FIELDS SEARCHED**

Minimum documentation searched (classification system followed by classification symbols)

IPC：H04W H04L

Documentation searched other than minimum documentation to the extent that such documents are included in the fields searched

Electronic data base consulted during the international search (name of data base and, where practicable, search terms used)

CNTXT; ENTXTC; DWPI; 3GPP: 感知, 感测, 报头, 报文头, 包头, 时延, 相位, 幅度, 反射, 直达, sensing, packet, message, header, latency, phase, amplitude, reflect+, LOS

**C.    DOCUMENTS CONSIDERED TO BE RELEVANT**

| Category* | Citation of document, with indication, where appropriate, of the relevant passages | Relevant to claim No. |
|---|---|---|
| X | EP 3872520 A2 (ORIGIN WIRELESS, INC.) 01 September 2021 (2021-09-01)<br>description, paragraphs [0014]-[0033], and claims 1-5 | 1-29 |
| A | CN 111600617 A (INSTITUTE OF SOFTWARE, CHINESE ACADEMY OF SCIENCES) 28 August 2020 (2020-08-28)<br>entire document | 1-29 |
| A | CN 112600630 A (GUANGZHOU UNIVERSITY) 02 April 2021 (2021-04-02)<br>entire document | 1-29 |
| A | CN 112748425 A (HUAWEI TECHNOLOGIES CO., LTD.) 04 May 2021 (2021-05-04)<br>entire document | 1-29 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 August 2023** | **07 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/095075**

| Patent document cited in search report | | | Publication date (day/month/year) | Patent family member(s) | | | Publication date (day/month/year) |
|---|---|---|---|---|---|---|---|
| EP | 3872520 | A2 | 01 September 2021 | US | 2021232235 | A1 | 29 July 2021 |
| CN | 111600617 | A | 28 August 2020 | None | | | |
| CN | 112600630 | A | 02 April 2021 | None | | | |
| CN | 112748425 | A | 04 May 2021 | WO | 2021083368 | A1 | 06 May 2021 |
| | | | | EP | 4043917 | A1 | 17 August 2022 |

Form PCT/ISA/210 (patent family annex) (July 2022)

**REFERENCES CITED IN THE DESCRIPTION**

**Patent documents cited in the description**

- CN 202210561085